# EUROPÄISCHE PATENTSCHRIFT

(11) **EP 0 881 496 B1**
(45) Veröffentlichungstag und Bekanntmachung des Hinweises auf die Patenterteilung: **23.07.2003**
(21) Anmeldenummer: 98108013.8
(22) Anmeldetag: 02.05.1998
(51) Int. Cl.: G01P 1/02, H01R 13/66

(54) **Einschub für einen Drehwertgeber**
Insert for a rotational speed sensor
Insert pour un capteur de rotation

(30) Priorität: 30.05.1997 DE 29709447 U
(43) Veröffentlichungstag der Anmeldung: 02.12.1998
(73) Patentinhaber: SIEMENS AKTIENGESELLSCHAFT, 80333 München (DE)
(72) Erfinder: Modest, Otmar, Ing. grad., 78078 Niederschach (DE); Hase, Heinz, 78048 Villingen-Schwenningen (DE); Gwosch, Waldemar, 78086 Brigachtal (DE)

(56) Entgegenhaltungen:
- EP-A- 0 194 758
- DE-C- 4 108 886
- DE-C- 19 546 865
- DE-U- 9 311 223
- FR-A- 2 683 315

## Beschreibung

Die Erfindung betrifft einen Einschub für einen Drehwertgeber mit einem hülsenförmigen Gehäuse, wobei der Einschub eine mit wenigstens der Meßwerterfassung und der Signalformung dienenden Bauelementen bestückte Leiterplatte und einen mit dem Gehäuse verbindbaren Steckersockel umfaßt, wobei in letzterem gestuft ausgebildete Kontaktstifte parallel zur Gehäuseachse eingebettet sind, derart, daß die Abschnitte der Kontaktstifte kleineren Durchmessers eine in dem Steckersockel gehalterte Leiterplatte übergreifen.

Derartige Drehwertgeber sind bezüglich des Funktionsprinzips im allgemeinen als Induktions- oder Magnetfeldgeber konzipiert, wobei der Meßwertwandler auf einer Leiterplatte befestigt ist, auf der wenigstens die für eine Impulsformung und Impulsverstärkung erforderlichen elektronischen Bauelemente angeordnet sind. Die im Oberbegriff genannte Bauform, bei der das Gehäuse vorzugsweise als Schraubgehäuse ausgebildet ist, sieht üblicherweise einen in das Gehäuse einsetzbaren und mit dem Gehäuse verbördelbaren Einschub, bestehend aus der bestückten Leiterplatte und dem Steckersockel vor. Das heißt, es ist eine mechanische Verbindung der Leiterplatte mit dem Steckersockel und eine elektrische Verbindung zwischen der Leiterplatte und den von außen zugänglichen Kontaktelementen des Steckersockels zu schaffen. Sind für die Kontaktelemente des Gebers als Flachkontakte ausgebildete Kontaktzungen vorgesehen, können diese unmittelbar in der Leiterplatte durch Einpressen befestigt und durch entsprechende Öffnungen im Steckersockel aus diesem und somit aus dem Geber herausgeführt werden. Werden andererseits als Rundkontakte ausgebildete Kontaktstifte vorgesehen und im Steckersockel spritzgießtechnisch eingebettet, um eine für eine Anwendung in Fahrzeugen erhöhte Kontaktsicherheit der Steckerverbindung nach DIN 72585 zu schaffen, so ergeben sich Probleme bei der Kontaktierung der relativ starren, als Drehteile ausgebildeten Kontaktstifte mit den betreffenden Leiterbahnen auf der Leiterplatte. Das heißt, es müssen die mehr oder weniger großen Abstände zwischen der in dem Steckersockel gehalterten Leiterplatte und den Kontaktstiften überbrückt werden. Dies erfordert zusätzliche Überbrückungsbauteile, deren Montage sowie Lötaufwand. Entscheidend ist jedoch, daß eine solche Kontaktierung der Kontaktstifte mit den Leiterbahnen der Leiterplatte nicht mechanisierbar ist.

Die Druckschrift DE-C-410 8886 offenbart einen Steckersockel mit Steckkontaktelementen, die federzungenartige Abschnitte zur Kontaktierung einer im Steckersockel gehalterten Leiterplatte dienen, diese Abschnitte sind aber nicht als Abschnitte kleineren Durchmessers von Kontaktstiften, Darüberhinaus bilden Leiterplatte und Steckersockel bei dieser Schnift keinen Einschub, der als ganzes in das Sensorgehäuse eingeführt wird.

Aufgabe der vorliegenden Erfindung war es daher, die elektrische Verbindung zwischen den Kontaktstiften eines Drehwertgebers und dessen Leiterplatte konstruktiv zu vereinfachen und die Montage des aus Steckersockel und Leiterplatte bestehenden Einschubes zu erleichtern.

Die Aufgabe wird dadurch gelöst, daß die Abschnitte der Kontaktstifte kleineren Durchmessers in Richtung der Leiterplatte derart abgekröpft sind, daß sie auf der Leiterplatte federnd aufliegen und daß die Kontaktstifte unmittelbar mit den betreffenden Leiterbahnen der Leiterplatte verlötet sind.

Zweckmäßige Maßnahmen beschreiben die Ansprüche 2 und 3.

Die Erfindung bietet den Vorteil, daß der Fertigungsfluß nicht durch eine Sonderbestückung mit Abstands- bzw. Überbrückungsbauteilen unterbrochen werden muß und daß jeder Kontaktstift nur eine Lötverbindung mit der Leiterplatte erfordert, die aufgrund der federnden Auflage des jeweiligen Kontaktstiftes als besonders kontaktsicher gelten kann. Außerdem ist die durch die Federfunktion der Kontaktstifte gegebene Toleranzunempfindlichkeit hervorzuheben. Darüber hinaus verbessert die gefundene Lösung die Handhabbarkeit des Einschubes vor dem Verlöten der Kontaktstifte mit den Leiterbahnen indem die Leiterplatte auf einer relativ großen Länge, das heißt im Steckersockel und zwischen den Kontaktstiften gehaltert ist. Insofern sind die Voraussetzungen auch für eine automatische Komplettierung des Einschubes gegeben. Werden die Kontaktstifte zweiteilig ausgebildet, wobei der Abschnitt kleineren Durchmessers in den Abschnitt größeren Durchmessers eingepreßt wird, läßt sich für den Abschnitt kleineren Durchmessers ein weicheres und somit leichter biegbares Material und für den Abschnitt größeren Durchmessers ein hartes, verschleißfestes Material verwenden. Auch ist es denkbar, die Kontaktstifte im Biegebereich zu glühen.

Außerdem sei noch erwähnt, daß das Abkröpfen der Kontaktstifte gleichzeitig in einem Biegewerkzeug erfolgen kann, wobei die Abkröpfmaße je nach Lage der Leiterplatte verschieden sein können.

Im folgenden sei die Erfindung anhand von Zeichnungen eines Ausführungsbeispiels näher erläutert.

Es zeigen:
- Figur 1: eine Ansicht eines einbaufertig montierten Drehwertgebers,
- Figur 2: eine Rückansicht des Drehwertgebers gemäß Figur 1,
- Figur 3: einen Schnitt des Steckersockels gemäß der Schnittlinie A in Figur 2,
- Figur 4: eine Ansicht des Steckersockels mit einem um 90°gegenüber dem Schnitt in Figur 3 versetzten Teilschnitt.

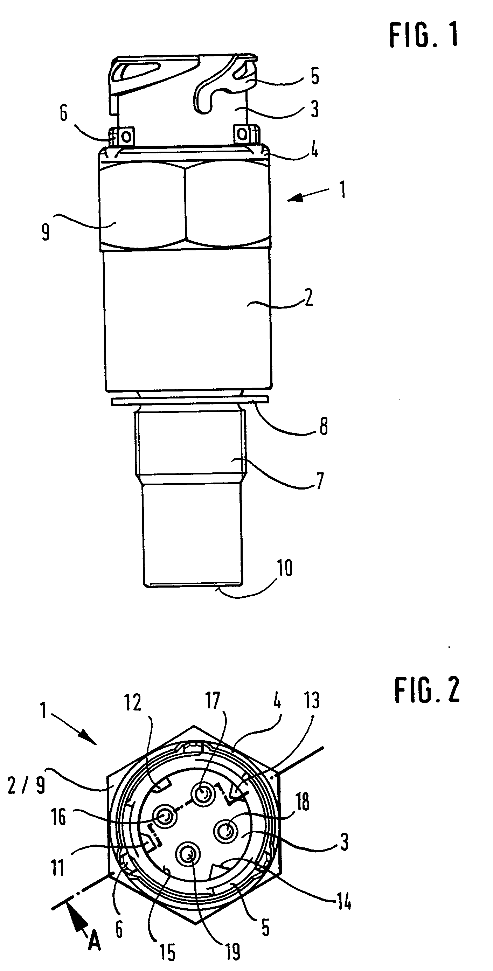

Der einbaufertig montierte Drehwertgeber 1 gemäß Figur 1 wird, was seine äußere Form anbelangt, gebildet von einem Gehäuse 2 und einem Steckersockel 3, welcher mittels einer Bördelverbindung 4 an dem Gehäuse 1 befestigt ist. An dem Steckersockel 3 sind umfangsseitig Renkverbindungskonturen 5 angeformt, die dem Anschließen einer nicht dargestellten Überwurfmutter dienen, mit welcher ein durch einen Stecker abgeschlossenes Kabel an dem Drehwertgeber 1 befestigbar ist. Mit nicht näher bezeichneten Durchgangsbohrungen versehene, an dem Steckersockel 3 angeformte Ohren, von denen eines mit 6 bezeichnet ist, sind für die Durchführung eines die Überwurfmutter sichernden Plombendrahtes vorgesehen. Ein an dem zweistufig ausgebildeten Gehäuse 2 angeformtes Gewinde 7 dient in an sich bekannter Weise dem Befestigen des Drehwertgebers 1 beispielsweise an der Wand eines Getriebegehäuses eines Kraftfahrzeuges, und zwar unter Zwischenlage einer unverlierbar angebrachten, ringförmigen Scheibe 8. Zum diesbezüglichen Ansetzen eines Werkzeuges ist an dem Gehäuse 2 ein Sechskant 9 ausgebildet. Stirnseitig ist das Gehäuse 2 durch eine nichtmagnetische Membrane 10, die mit dem Gehäuse 2 verbördelt bzw. verschweißt ist, abgeschlossen. Auf diese Weise läßt sich ein relativ enger Luftspalt zwischen dem Meßwertwandler des Drehwertgebers 1 und einer getriebeseitig zugeordneten Taktscheibe verwirklichen.

Die Rückansicht des Drehwertgebers 1, Figur 2, zeigt eine in dem Steckersockel 3 ausgeformte, mit Kodierungsrippen 11, 12, 13 und 14 versehene Steckerfassung 15 sowie die in dem Steckersockel 3 spritzgießtechnisch eingebetteten, als Rundkontakte ausgebildeten Kontaktstifte 16, 17, 18 und 19.

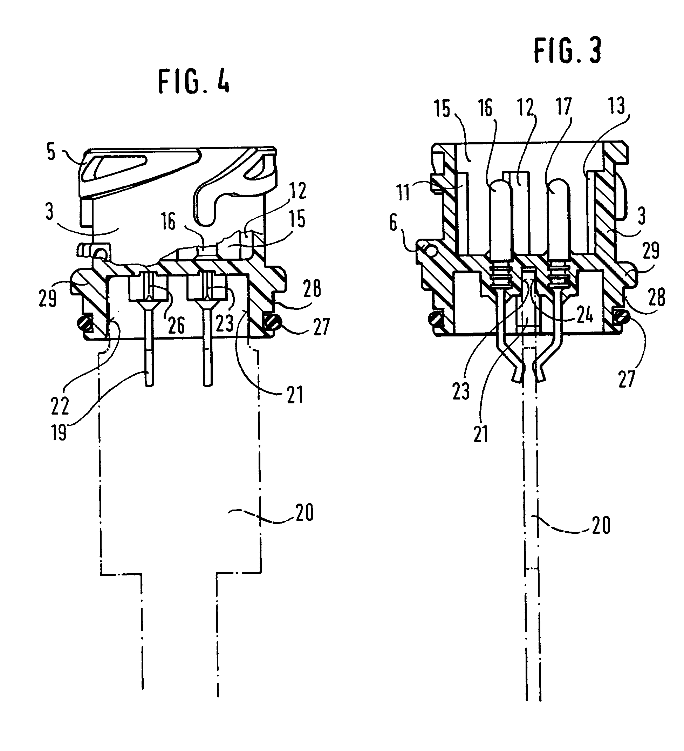

Wie aus den Figuren 3 und 4 ersichtlich ist, sind zur Halterung einer Leiterplatte 20 im Steckersockel 3 relativ eng tolerierte Führungsflächen 21 und 22 sowie sich gegenüberstehende Schneiden 23, 24 bzw. 25, 26 (nicht sichtbar) ausgebildet, derer Abstand voneinander kleiner ist als die Stärke der Leiterplatte 20, so daß beim Einstecken einer Leiterplatte 20 in den Steckersockel 3, das heißt beim Komplettieren des Einschubes, eine Verformung der Schneiden 23, 24 bzw. 25, 26 erfolgt. Ferner zeigen die Figuren 3 und 4 die nicht näher bezeichneten Abkröpfungen der Kontaktstifte 16, 17, 18 und 19, wobei der Abstand zwischen den sich gegenüberliegenden Abkröpfungen ebenfalls kleiner ist als die Stärke der Leiterplatte 20. Mit 27 ist ein O-Ring bezeichnet, welcher dem Abdichten des Sitzes 28 des Steckersockels 3 im Gehäuse 2 dient. Ein am Steckersockel 3 ausgebildeter Bund 29 begrenzt den Sitz 28 und wirkt bezüglich des Gehäuses 2 gleichzeitig als Bördelkern.

Zur Montage des Einschubes wird der Steckersockel 3, in welchem die Kontaktsstifte 16, 17, 18 und 19 als Insertteile eingebettet sind gegebenenfalls unter Zwischenschaltung eines Glühvorganges einem Biegewerkzeug zugeführt. Nachfolgend wird die vormontierte Leiterplatte 20 auf den Steckersockel 3 aufgesteckt und der so gebildete Einschub durch Löten mechanisch und elektrisch fertiggestellt.

Die Komplettierung des Drehwertgebers 1 erfolgt indem der Einschub, nach dem Aufziehen des 0-Ringes 27 in das Gehäuse 2, welches teilweise mit Gießharz gefüllt ist, eingesetzt, das Gehäuse 2 mit dem Steckersockel 3 verbördelt und nachfolgend das Gießharz durch eine geeignete Wärmebehandlung ausgehärtet wird.

## Patentansprüche

1. Einschub für einen Drehwertgeber (1) mit einem hülsenförmigen Gehäuse (2), wobei der Einschub eine mit wenigstens der Meßwerterfassung und der Signalformung dienenden Bauelementen bestückte Leiterplatte (20) und einen mit dem Gehäuse verbindbaren Steckersockel (3) umfaßt, wobei in letzterem gestuft ausgebildete Kontaktstifte (16,17,18,19) parallel zur Gehäuseachse eingebettet sind derart, daß die Abschnitte der Kontaktstifte kleineren Durchmessers die in dem Steckersockel (3) gehalterte Leiterplatte (20) übergreifen,
**dadurch gekennzeichnet,**
**daß** die Abschnitte der Kontaktstifte (16, 17, 18, 19) kleineren Durchmessers in Richtung der Leiterplatte (20) derart abgekröpft sind, daß sie auf der Leiterplatte (20) federnd aufliegen und
**daß** die Kontaktstifte (16, 17, 18, 19) unmittelbar mit den betreffenden Leiterbahnen der Leiterplatte (20) verlötet sind.

2. Einschub für einen Drehwertgeber nach Anspruch 1,
**dadurch gekennzeichnet,**
**daß** die Kontaktstifte (16, 17, 18, 19) im Biegebereich geglüht sind.

3. Einschub für einen Drehwertgeber nach Anspruch 1,
**dadurch gekennzeichnet,**
**daß** die Kontaktstifte (16, 17, 18, 19) zweiteilig ausgebildet sind.

## Claims

1. Plug-in unit for a rotational speed sensor (1) having a sleeve-shaped housing (2), the plug-in unit comprising a printed circuit board (20) which is equipped at least with the component for registering measured values and for shaping the signals, and a plug socket (3) which can be connected to the housing, contact pins (16, 17, 18, 19) which are formed in stepped fashion in said plug socket (3) being embedded in such a way that the sections of the contact pins with a relatively small diameter engage over the printed circuit board (20) which is secured in the plug-in socket (3), **characterized in that** the sections of the contact pins (16, 17, 18, 19) with a relatively small diameter are bent in the direction of the printed circuit board (20) in such a way that they rest in a sprung fashion on the printed circuit board (20), and **in that** the contact pins (16, 17, 18, 19) are soldered directly to the respective conductor tracks of the printed circuit board (20).

2. Plug-in unit for a rotational speed sensor according to Claim 1, **characterized in that** the contact pins (16, 17, 18, 19) are annealed in the bent region.

3. Plug-in unit for a rotational speed sensor according to Claim 1, **characterized in that** the contact pins (16, 17, 18, 19) are embodied in two parts.

## Revendications

1. Dispositif insérable pour un capteur de vitesse de rotation (1) comportant un boîtier (2) en forme de douille, dans lequel le dispositif insérable comporte une carte imprimée (20) équipée de composants servant au moins à la saisie de valeurs de mesure et à la formation de signal et comprend un socle de connecteur (3) qui peut être relié au boîtier, des pointes de contact (16, 17, 18, 19) étagées étant insérées en dernier parallèlement à l'axe du boîtier, de sorte que les parties des pointes de contact de plus petit diamètre recouvrent la carte imprimée (20) fixée dans le socle de connecteur (3),
**caractérisé en ce que**
les parties des pointes de contact (16, 17, 18, 19) de plus petit diamètre sont coudées en direction de la carte imprimée (20) de manière qu'elles appuient élastiquement sur la carte imprimée (20) et
que les pointes de contact (16, 17, 18, 19) sont brasées directement avec les pistes conductrices concemées de la carte imprimée (20).

2. Dispositif insérable pour un capteur de vitesse de rotation selon la revendication 1,
**caractérisé en ce que**
les pointes de contact (16, 17, 18, 19) sont collées dans la zone de coudage.

3. Dispositif insérable pour un capteur de vitesse de rotation selon la revendication 1,
**caractérisé en ce que**
les pointes de contact (16, 17, 18, 19) sont faites en deux parties.
